# EUROPEAN PATENT SPECIFICATION

(11) **EP 1 497 077 B1**
(45) Date of publication and mention of the grant of the patent: **30.10.2013**
(21) Application number: 03723106.5
(22) Date of filing: 11.04.2003
(51) Int. Cl.: B24D 3/00

(54) **METAL-COATED ABRASIVES, GRINDING WHEEL USING METAL-COATED ABRASIVES AND METHOD OF PRODUCING METAL-COATED ABRASIVES**
METALLBESCHICHTETE SCHLEIFMITTEL, METALLBESCHICHTETE SCHLEIFMITTEL VERWENDENDE SCHLEIFSCHEIBE UND VERFAHREN ZUR HERSTELLUNG VON METALLBESCHICHTETEN SCHLEIFMITTELN
ABRASIFS RECOUVERTS DE METAL, MEULE UTILISANT DES ABRASIFS RECOUVERTS DE METAL ET PROCEDE DE PRODUCTION D'ABRASIFS RECOUVERTS DE METAL

(30) Priority: 11.04.2002 JP 2002108727; 16.04.2002 US 372431 P; 16.10.2002 JP 2002301214
(43) Date of publication of application: 19.01.2005
(73) Proprietor: SHOWA DENKO K.K., Tokyo 105-8518 (JP)
(72) Inventor: IHARA, Eiji, c/o Showa Denko K.K., Shiojiri-shi, Nagano 399-6461 (JP)
(74) Representative: Strehl Schübel-Hopf & Partner
(86) International application number: PCT/JP2003/004654
(87) International publication number: WO 2003/084717

(56) References cited:
- EP-A1- 0 786 506
- JP-A- 8 071 927
- JP-A- 2000 271 870
- JP-A- 2001 047 367
- JP-A- 2001 107 260
- US-A- 5 250 086

## Description

### TECHNICAL FIELD

The present invention relates to an abrasive used in grinding wheels, coated abrasives, or the like and, more particularly, relates to a metal-coated abrasive wherein the surface of abrasive grains is coated with metal to enhance a retention force by which the abrasive is retained.

### BACKGROUND ART

A resinoid grinding wheel using a resin as a bonding material has problems in that abrasive often falls off during grinding, and the grinding ratio of the grinding wheel is reduced because it has a low retention force by which the abrasive is retained in a bond layer as compared with a grinding wheel using other types of bond. Therefore, various proposals to increase the retention force by which the abrasive is retained have been made.

Taking the case of a cubic boron nitride, there has been developed an abrasive whose surface is provided with single- or multi-layered coatings of nickel, nickel-phosphorus, cobalt, cobalt-phosphorus or titanium, thereby improving retention force in a bond layer by means of irregularity of the coated surface (see, for example, the following Patent Applications), and the resulting abrasive is used in resinoid grinding wheels at present.
Japanese Patent Application, First Publication No. Sho 60-51678
Japanese Patent Application, First Publication No. Sho 59-142066
Japanese Patent Application, First Publication No. Sho 59-30671
Japanese Patent Application, First Publication No. Sho 60-52594
Japanese Patent Application, First Publication No. Hei 9-323046

For example, Japanese Patent Application, First Publication No. Sho 60-51678 discloses a method of producing a nickel-coated abrasive, which has irregularities on the surface and also has a high retention force, by providing a metal layer on the surface of abrasive grains and also providing a first layer made of a spongy nickel and a second layer made of a dense nickel.

Also Japanese Patent Application, First Publication No. Sho 59-142066 discloses a resinoid grinding wheel whose grinding ratio was improved by providing a first layer made of nickel, a second layer made of cobalt, and a third layer made of nickel coating.

As described above, the retention force by which the abrasive is retained in the bond can be increased by coating the surface of abrasive grains and, therefore, falling-off of the abrasive during grinding is reduced and the grinding ratio of the grinding wheel is improved.

However, the retention force between the metal-coated abrasive and the resinoid bond obtained by metal coating is a physical retention force caused by irregularities of the coated surface. As the grain size of the abrasive to be used decreases, small irregularities are formed on the coated surface, and also the number of irregularities on the surface is reduced. Therefore, the contact area between the coated surface and the bond layer decreases, and the retention force by which the abrasive is retained in the resinoid bond becomes insufficient.

In the grinding process, the grain size of the abrasive must be reduced to improve the surface roughness of a work material. In the trend of size reduction and higher accuracy of workpieces, it has been strongly desired by the industrial world to develop an abrasive having a small grain size even when used in a resinoid grinding wheel. However, as described above, an abrasive having a very small grain size still has a problem in that sufficient retention force is not attained even by metal coating, and also has problems, for example, of increased tool cost due to low grinding ratio, increase in total working cost due to increase in the number of trueing and dressing operations for adjustment of grinding wheel size and restoration of cutting edge, and impairment of surface roughness of a work material due to falling-off of abrasive grains. Therefore, strong demand for improvement of the retention force by which the abrasive is retained in the resinoid bond still remained.

Japanese Patent Application, First Publication No. Hei 10-337670 discloses a method of preventing early falling-off of abrasive without using a metal coating, which comprises forming an abrasive (composite abrasive grains) comprising abrasive grains bonded by a vitrified-bond material or a metal bond material, thereby improving the retention force in the resinoid bond by means of the irregularity portion.

Irregularity formed by bonding these abrasive grains improves the retention force by which the abrasive is retained in the resinoid bond and also improves the grinding ratio. However, composite abrasive grains obtained by bonding abrasive grains using a vitrified-bond material or a metal bond material had problems in that strong bonding of the abrasive grains give composite abrasive grains in the same state as in the case of using abrasive grains having a larger grain size than that of abrasive grains constituting the composite abrasive grains, and thus the value of the grinding power increases.

In a resinoid grinding wheel, when the value of the grinding power increases, phenomena such as deterioration of the resinoid bond and grinding burn of a work material due to grinding heat are likely to occur. To prevent these phenomena, it is important to maintain low values of grinding power (to maintain the sharpness).

There is a strong demand for improvement of the retention force by which the abrasive is retained with respect to the tool cost, total working cost, and surface roughness of a work material. To maintain the sharpness without increasing the value of the grinding power, it becomes necessary to restore it by proper falling-off and crushing of abrasive grains.

EP-A-1 120 196 discloses an abrasive in which abrasive grains are arranged on a grinding stone substrate and are fixed in a metal plating phase.

### DISCLOSURE OF INVENTION

The present invention provides an abrasive which can attain a sufficient retention force in a resinoid grinding wheel even in the case of small grain size, a method of producing the same, and grinding wheel, coated abrasives which use the same.

The present inventors have intensively researched to achieve the above objects. As a result, they have found a method which can yield a sufficient retention force on an abrasive in a resinoid grinding wheel even in the case of a small grain size and also can suppress an increase in value of grinding power, and thus the present invention has been completed. The present invention is defined by the following:
[1] A metal-coated abrasive comprising a metal (2, 3, 5, 7) and abrasive grains (1, 4, 6) bonded together by the metal (3, 7), wherein
   the abrasive grains (1, 4, 6) are coated with a plurality of metal layers (2, 5),
   the metal layers other than an outermost metal layer, with which the abrasive grains (1) are coated, contains cobalt or cobalt-phosphorus, and
   2 to 100 abrasive grains (1, 4, 6) are bonded together by the metal (3, 7).
[2] The metal-coated abrasive according to [1] above, wherein the metal layer (2), with which the abrasive grains are coated, contains at least one metal selected from the group consisting of nickel, nickel-phosphorus, cobalt, cobaltphosphorus, titanium, copper, chromium, iron, zirconium, niobium, molybdenum, and tantalum.
[3] The metal-coated abrasive according to [1] or [2] above, wherein the outermost metal layer of the metal layer (2), with which the abrasive grains are coated, is formed of either nickel or nickel-phosphorus.
[4] The metal-coated abrasive according to any one of [1] to [3] above, wherein the metal (3), by which the abrasive grains are bonded, contains at least one metal selected from the group consisting of nickel, nickel-phosphorus, cobalt and cobaltphosphorus.
[5] The metal-coated abrasive according to [4] above, wherein the metal (3), by which the abrasive grains are bonded, is nickel or nickel-phosphorus.
[6] The metal-coated abrasive according to any one of [1] to [5] above, wherein the abrasive grains (1) have an average grain size of 0.5 to 300 um.
[7] The metal-coated abrasive according to any one of [1] to [6] above, wherein the abrasive grains (1) comprise at least one selected from the group consisting of cubic boron nitride, diamond, alumina and silicon carbide.
[8] A grinding wheel comprising a metal-coated abrasive containing 5% by weight or more of the metal-coated abrasives of any one of [1] to [7] above.
[9] Coated abrasives comprising the metal-coated abrasives of any one of [1] to [7] above.
[10] A method of producing the metal-coated abrasive of any one of [1] to [7] above, which comprises dipping abrasive grains (1) in an electroplating or electroless plating bath to form a metal layer (2) on the surface of the abrasive grains (1) while stirring, and bonding the abrasive grains coated with the metal layer (2) while gently stirring.

### BRIEF DESCRIPTION OF DRAWINGS

Fig. 1 is a schematic view showing an example of a metal-coated abrasive of the present invention.
Fig. 2 is a schematic view showing another example of a metal-coated abrasive of the present invention

### BEST MODE FOR CARRYING OUT THE INVENTION

The metal-coated abrasive of the present invention comprises a metal and plural abrasive grains bonded by the metal according to claim 1.

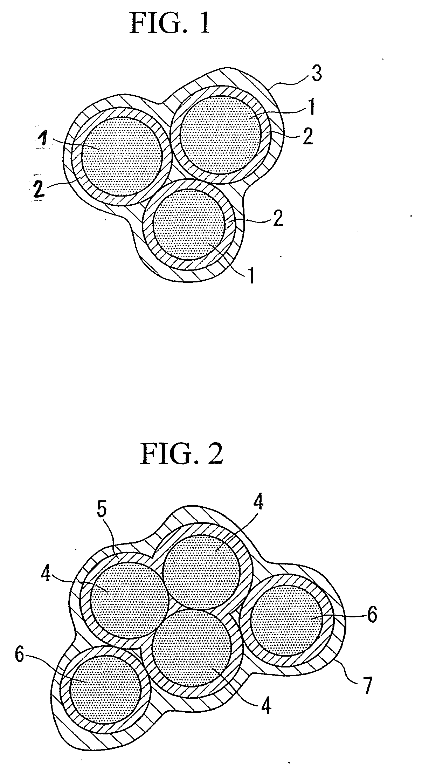

In Fig. 1 and Fig. 2, the metal-coated abrasive of the present invention is schematically shown. As shown in Fig. 1, the metal-coated abrasive of the present invention has a structure such that each of abrasive grains 1 is coated with a metal layer 2 and the metal-coated abrasive grains are bonded by a metal 3. As shown in Fig. 2, the metal-coated abrasive of the present invention may have a structure such that plural abrasive grains 4 are coated with a metal layer 5 in the state of being bonded, and are bonded with other metal-coated abrasive grains 6 by a metal 7. In this case, the metal layer 2 and the bonding metal 3 may be made of the same or different kinds of metal. Also the metal layer 5 and the bonding metal 7 may be made of the same or different kinds of metal.

Since the metal-coated abrasive of the present invention has such a structure, the retention force in the resinoid bond is increased as compared with a conventional single-grain metal-coated abrasive, and thus it is made possible to suppress falling-off of the abrasive during grinding and to remarkably improve the grinding ratio. This effect is remarkably exerted in the case of abrasive grains having a small grain size.

Taking the case of cBN, a conventionally used metal-coated abrasive is an abrasive obtained by coating a single abrasive grain with a single- or multi-layered metal such as nickel, nickel-phosphorus, cobalt, cobalt-phosphorus or titanium and is produced so that the resulting abrasive does not contain plural abrasive grains bonded by metal coating, like the metal-coated abrasive of the present invention. Therefore, as the grain size of abrasive grains decreases, small irregularities are formed on the coated surface, and also the number of irregularities on the surface is reduced. Therefore, the retention force in the resinoid bond is reduced and the abrasive often falls off during grinding, resulting in low grinding ratio. In the case of the metal-coated abrasive of the present invention, since irregularities formed by bonding the metal-coated abrasive grains serve as an anchor in the resinoid bond, the retention force of the metal-coated abrasive in the resinoid bond is improved, and the grinding ratio is improved.

The resinoid grinding wheel using the metal-coated abrasive of the present invention exhibited lower value of the grinding power as compared with a conventional abrasive (composite abrasive grains) obtained by bonding plural abrasive grains using a vitrified-bond material or a metal bond material, and also exhibited the same value of the grinding power as that of a conventional resinoid grinding wheel using a single-grain metal-coated abrasive.

The reason is considered as follows. Although the metal-coated abrasive of the present invention exhibits the same retention force by which the abrasive is retained in the resinoid bond as that of a conventional abrasive (composite abrasive grains) obtained by bonding plural abrasive grains using a vitrified-bond material or a metal bond material, the abrasive grains are bonded by a metal having a smaller bonding force than that of the vitrified-bond material or metal bond material, and thus the abrasive grains fall off from the bonding metal portion when a large load is applied and then produce new abrasive grains which serve as a cutting edge, thereby preventing an increase in value of the grinding power.

The abrasive grains used in the present invention may be made of either single crystal or polycrystal and also may be subjected to any surface treatment. As shown in Fig. 2, plural abrasive grains may be bonded together by sintering or other methods.

The average grain size of the abrasive grains used in the metal-coated abrasive of the present invention is preferably within a range from 0.5 to 300 µm. When the average grain size exceeds 300 µm, bonding of the abrasive grains tends to exert a small effect. On the other hand, when the average grain size is less than 0.5 µm, it becomes difficult to control the degree of bonding of the abrasive grains in the case of providing the surface of the abrasive grains with a metal coating.

The number of the abrasive grains to be bonded together in the metal-coated abrasive of the present invention is within a range from 2 to 100. When more than 100 abrasive grains are bonded together, the resulting metal-coated abrasive tends to be too large and distribution of the metal-coated abrasives in the resinoid grinding wheel tends to become non-uniform, and thus the quantity of abrasion at the abrasive-free portion tends to increase during grinding and the grinding ratio tends to be lowered.

The metal layer coating the abrasive grains preferably contains at least one metal selected from the group consisting of nickel, nickel-phosphorus, cobalt, cobalt-phosphorus, titanium, copper, chromium, iron, zirconium, niobium, molybdenum and tantalum.

In the plural metal layers, inner metal layers (layers other than the outermost metal layer) contain cobalt or cobalt-phosphorus. Since cobalt and cobalt-phosphorus have large resistance to deformation at high temperature and suppress deterioration due to grinding heat, they can protect the abrasive grains by preventing the abrasive grains from falling off and achieve the effect of improving the grinding ratio.

In the metal-coated abrasive of the present invention, the metal, by which the metal-coated abrasive grains are bonded together, preferably contains at least one kind selected from the group consisting of nickel, nickel-phosphorus, cobalt, and cobalt-phosphorus. Among these metals, nickel or nickel-phosphorus is preferably used in view of corrosion resistance and productivity. The metal may be the same kind as that used in the metal layer.

Examples of the abrasive grains used in the metal-coated abrasive of the present invention include cubic boron nitride, diamond, alumina, silicon carbide, and other powdered hard substances. These hard substances may be used alone or in combination. When using cubic boron nitride, diamond, or a mixture thereof as abrasive grains, particularly remarkable effects can be obtained. Since cubic boron nitride and diamond are excellent in abrasive grain strength but have relatively insufficient retention force by which the abrasive grains are retained in the bond, the effect obtained by the metal coating of the present invention is larger than that of the other hard substances and a remarkable effect can be obtained.

In the formation of the metal layer of the metal-coated abrasive grain of the present invention, known methods such as electroplating and electroless (chemical) plating methods can be used. Among these methods, an plating method is preferably used.

The method of coating the metal layer on the abrasive grains according to the present invention will now be described using the case where nickel coating (nickel-phosphorus coating) is conducted by an electroless (chemical) plating method.

Before the nickel coating conducted by an electroless plating method, a metal (for example, palladium) serving as a nucleus for deposition of nickel is preferably deposited on the surface of the abrasive grains. For example, the method of depositing a palladium metal (activation treatment) after dispersing and applying tin chloride on the surface of the abrasive grains (sensitization treatment) is commonly used, and can be conducted in a known manner.

Then, the abrasive grains are subjected to electroless plating wherein nickel is deposited on the surface of the abrasive grains by dipping in an electroless plating bath (for example, a mixed bath of nickel sulfate, sodium hypophosphite, sodium acetate, sodium citrate and sulfuric acid). In this case, the electroless plating bath is mixed with vigorous stirring so that the abrasive grains are not bonded by a metal to be plated. Since this state varies depending on the size and shape of the plating bath and the size and shape of the stirring blade, conditions must be set for each apparatus.

In the stage where a nickel coating is formed on the surface of abrasive grains, stirring is performed slowly by reducing the revolution rate of the stirring blade, and thereby the abrasive grains are bonded. In that case, the degree of bonding is controlled by the rate at which stirring is slowed and the retention time.

After the completion of metal coating, the metal-coated abrasive is taken out from the plating bath, washed with water, dried and then shifted through a sieve to obtain a metal-coated abrasive having a predetermined size of the present invention.

A grinding wheel of the present invention contains the metal-coated abrasive. The content of the metal-coated abrasive of the present invention in the grinding wheel is 5% by weight or more. When the content of the metal-coated abrasive is less than 5% by weight, sufficient effect of the use of the metal-coated abrasive of the present invention is not exerted and the grinding ratio is hardly improved.

In the case in which the resinoid grinding wheel is produced by using the metal-coated abrasive of the present invention, a higher grinding ratio is obtained as compared with the case of using a conventional single-grain metal-coated abrasive, and thus grinding cost is reduced. In the case of the resinoid grinding wheel using the metal-coated abrasive comprising abrasive grains having a very small grain size, a remarkable effect is exerted. In that case, the value of the grinding power is the same as in the case of using a conventional single-grain metal-coated abrasive. The surface roughness of the work material after grinding is improved as compared with the case of using a conventional single-grain metal-coated abrasive.

As the bond of the resinoid grinding wheel of the present invention, a commercially available resinoid bond can be used according to the application field. Examples of the bond include bonds made mainly of a phenolic polymer compound and a polyimide-type polymer compound. The amount of the bond in the grinding wheel is preferably controlled within a range from 25% to 90% by volume. When the amount of the bond is less than 25% by volume, the retention force by which the abrasive is retained is reduced and, as a result, the abrasive often falls off as the grinding ratio is reduced. On the other hand, when the amount of the bond is more than 90% by volume, the amount of the abrasive grains is reduced and, therefore, the resulting abrasive is not suitable for use in a grinding tool.

In the resinoid grinding wheel of the present invention, there can also be used additives, which are commonly used in the production of the resinoid grinding wheels, such as solid antifriction agents, auxiliary bonding materials, aggregates, and/or porous materials.

### Examples

The following Examples illustrate the present invention in detail.

### (Example 1)

1 kg of cBN abrasive grains SBN-B, manufactured by SHOWA DENKO K.K. (nominal grain size: G-30, average grain size: 22 µm) was subjected to a sensitization treatment and an activation treatment. Specifically, the abrasive grains were dipped in 1 liter of an aqueous tin chloride solution prepared by adding distilled water to 1 g of tin chloride and 10 ml of hydrochloric acid, subjected to the sensitization treatment while maintaining with stirring at room temperature for 2 minutes, taken out from the aqueous solution, and then slightly washed with water. Thereafter, the abrasive grains were dipped in 1 liter of an aqueous palladium chloride solution prepared by adding distilled water to 0.5 g of palladium chloride and 75 ml of hydrochloric acid, subjected to the activation treatment while maintaining with stirring at room temperature for 2 minutes, taken out from the aqueous solution and then slightly washed with water.

The abrasive grains subjected to the sensitization treatment and the activation treatment were dipped in 25 liters of a plating bath prepared according to the formulation shown in Table 1. After adjusting the pH to 5 using sulfuric acid, the plating bath was heated to 90°C and stirred at 60 rpm using a stirrer. For the plating bath, an aqueous sodium hypophosphite solution (5 mol/liter) was used until the plating bath became transparent, and then the abrasive grains were subjected to nickel coating (nickel-phosphorus coating) using an electroless plating method.

After the plating bath became transparent, the revolution rate of the stirrer was decreased to 45 rpm and 25 liters of a plating bath (the pH was adjusted to 5 using sulfuric acid and was heated to 90°C) prepared according to the formulation shown in Table 1 was additionally charged in order to bond the nickel-coated abrasive grains. In the plating bath, an aqueous sodium hypophosphite solution (5 mol/liter) was added until the plating bath became transparent, and then nickel coating was conducted using an electroless plating method.

After the plating bath became transparent, the coated abrasive grains (metal-coated abrasive) were taken out from the plating bath, washed with water, dried and sifted through a sieve having an opening size of 50 µm, and then a metal-coated abrasive on the sieve was collected. SEM results revealed that metal-coated abrasive comprising about 2 to 10 abrasive grains accounts for 100%.

A portion of the metal-coated abrasive was taken out and the metal coating was dissolved using an acid, and then a weight ratio of the metal layer was calculated. As a result, it was 60.4% by weight.

### (Comparative Example 1)

Under the same conditions as in Example 1, 1 kg of cBN abrasive grains SBN-B, manufactured by SHOWA DENKO K.K. (nominal grain size: G-30, average grain size: 22 µm) were subjected to a sensitization treatment and an activation treatment, and were then dipped in 50 liters of a plating bath prepared according to the formulation shown in Table 1. After adjusting the pH to 5 using sulfuric acid, the plating bath was heated to 90°C and stirred at 60 rpm using a stirrer. In the plating bath, an aqueous sodium hypophosphite solution (5 mol/liter) was added until the plating bath became transparent, thereby the abrasive grains were subjected to nickel coating (nickel-phosphorus coating) using an electroless plating method.

After the plating bath became transparent, the metal-coated abrasive was taken out from the plating bath, was washed with water, was dried, and then was collected. SEM results revealed that metal-coated abrasive comprising about 2 or more abrasive grains bonded to each other were not present.

A portion of the metal-coated abrasive was taken out and the metal coating was dissolved using an acid, and then a weight ratio of the metal layer was calculated. As a result, it was 60.4% by weight.

### (Comparative Example 2)

Based on the descriptions of Japanese Patent Application, First Publication No. Hei 10-337670, composite abrasive grains were produced. cBN abrasive grains SBN-B, manufactured by SHOWA DENKO K.K. (nominal grain size: G-30, average grain size: 22 µm) and a borosilicate-based vitrified bond (grain size: 5 µm or less) which accounts for 30% by weight of SBN-B were charged in a stirring type granulator, and then a stirring blade was rotated at 500 rpm and a pulverizing blade was rotated at 2000 rpm. Granulation was conducted by spraying a binder (5 wt% cellulose/ethanol) over powders obtained by sufficiently mixing SBN-B with the vitrified bond and passing through a pulverizing blade portion. After drying and sifting through a sieve having an opening size of 20 µm, abrasive grains on the sieve were collected.

The surface of the collected abrasive grains was partially coated with a vitrified bond. A portion of the abrasive grains was taken out and the binder was dissolved in an alcohol by ultrasonic cleaning and a weight ratio of the coating (vitrified bond and binder) was calculated. As a result, it was 20% by weight.

100 g of the collected abrasive grains were mixed with 1 kg of SBN-B (nominal grain size: G-30, average grain size: 22 µm) and the mixture was subjected to a heat treatment in an atmospheric air at 900°C for one hour, thereby to dissolve the vitrified bond, with which the surface of the collected abrasive grains is coated, and to bond the abrasive grains, and thus composite abrasive grains were obtained. After cooling to room temperature and sifting through a sieve having an opening size of 50 µm, composite abrasive grains on the sieve were collected. SEM results revealed that composite abrasive grains comprising about 2 to 10 abrasive grains bonded with each other accounted for approximately 100%.

### (Example 2 and Comparative Examples 3 and 4)

Using the abrasive grains produced in Example 1 and Comparative Examples 1 and 2, resinoid grinding wheels were produced.

The shape and formulation of the resulting grinding wheels are shown below. The shape of the grinding wheel is represented by the symbol defined in JIS B 4131 (diamond and cubic boron nitride wheel), while the symbol 1A1 denotes the shape of the grinding wheel and symbols D, U, X and H respectively denote outer diameter of the grinding wheel, width of the grinding wheel (abrasive grains layer), thickness of abrasive grain layer, and hole diameter of the attaching portion (unit: mm).
Shape of grinding wheel:
1A1 shape: 150D × 5U × 3X × 76.2H
Formulation:
Abrasives: 30.6% by volume
Resinoid bond: 69.4% by volume (phenol resin)

### (Example 3 and Comparative Examples 5 and 6)

With respect to resinoid grinding wheels obtained in Example 2 and Comparative Examples 3 and 4, a grinding test was conducted under the following conditions. The results of the grinding test are shown in Table 2.
Grinding machine: horizontal spindle surface grinding machine
(axial motor of grinding wheel: 3.7 kW)
Work material: SKH-51 (HRc = 62 to 64)
Surface of work material: 200 mm × 100 mm
Grinding system: wet surface traverse grinding system
Grinding conditions:
Peripheral speed of grinding wheel: 1500 m/min
Table speed: 15 m/min.
Cross feed: 2 mm/pass
Depth of cut: 2 µm
Grinding fluid: JIS W2 soluble type, exclusive fluid for cBN

**Table 1: Formulation of nickel plating bath**

| Water | 50 liter |
|---|---|
| Nickel sulfate | 25 mol |
| Sodium acetate | 75 mol |
| Sodium citrate | 10 mol |

**Table 2: Results of grinding test**

| | Grinding ratio | Value of grinding power (W) | Surface roughness Ra (µm) |
|---|---|---|---|
| Example 3 | 523 | 225 | 0.05 |
| Comparative Example 5 | 305 | 230 | 0.09 |
| Comparative Example 6 | 481 | 355 | 0.07 |

### INDUSTRIAL APPLICABILITY

Since the metal-coated abrasive including a metal and plural abrasive grains bonded by the metal has a higher retention force by which the abrasive is retained in a resinoid bond than that of a conventional metal-coated abrasive, falling-off of the abrasive is reduced, and therefore it becomes possible to produce a resinoid grinding wheel, coated abrasives, which can achieve a higher grinding ratio. In that case, a value of the grinding power is the same as that in the case of using a conventional single-grain metal-coated abrasive and the surface roughness of a work material is improved.

## Claims

1. A metal-coated abrasive comprising a metal (2, 3, 5, 7) and abrasive grains (1, 4, 6) bonded together by the metal (3, 7), wherein
the abrasive grains (1, 4, 6) are coated with a plurality of metal layers (2, 5),
the metal layers other than an outermost metal layer, with which the abrasive grains (1) are coated, contain cobalt or cobalt-phosphorus, and
2 to 100 abrasive grains (1, 4, 6) are bonded together by the metal (3, 7).

2. The metal-coated abrasive according to claim 1, wherein the metal layer (2), with which the abrasive grains are coated, contains at least one metal selected from the group consisting of nickel, nickel-phosphorus, cobalt, cobaltphosphorus, titanium, copper, chromium, iron, zirconium, niobium, molybdenum, and tantalum.

3. The metal-coated abrasive according to claims 1 or 2, wherein the outermost metal layer of the metal layer (2), with which the abrasive grains are coated, is formed of either nickel or nickel-phosphorus.

4. The metal-coated abrasive according to any one of claims 1 to 3, wherein the metal (3), by which the abrasive grains are bonded, contains at least one metal selected from the group consisting of nickel, nickel-phosphorus, cobalt and cobaltphosphorus.

5. The metal-coated abrasive according to claim 4, wherein the metal (3), by which the abrasive grains are bonded, is nickel or nickel-phosphorus.

6. The metal-coated abrasive according to any one of claims 1 to 5, wherein the abrasive grains (1) have an average grain size of 0.5 to 300 µm.

7. The metal-coated abrasive according to any one of claims 1 to 6, wherein the abrasive grains (1) comprise at least one selected from the group consisting of cubic boron nitride, diamond, alumina and silicon carbide.

8. A grinding wheel comprising a metal-coated abrasive containing 5% by weight or more of the metal-coated abrasives of any one of claims 1 to 7.

9. Coated abrasives comprising the metal-coated abrasives of any one of claims 1 to 7.

10. A method of producing the metal-coated abrasive of any one of claims 1 to 7, which comprises dipping abrasive grains (1) in an electroplating or electroless plating bath to form a metal layer (2) on the surface of the abrasive grains (1) while stirring, and bonding the abrasive grains coated with the metal layer (2) while gently stirring.

## Patentansprüche

1. Metallbeschichtetes Schleifmittel, das ein Metall (2, 3, 5, 7) und durch das Metall (3, 7) zusammengehaltene Schleifmittelkörner (1, 4, 6) umfasst, wobei
die Schleifmittelkörner (1, 4, 6) mit einer Vielzahl von Metallschichten (2, 5) überzogen sind,
die anderen Metallschichten als eine äußerste Metallschicht, mit der die Schleifmittelkörner (1) überzogen sind, Kobalt or Kobalt-Phosphor enthalten, und
2 bis 100 Schleifmittelkörner (1, 4, 6) durch das Metall (3, 7) zusammengehalten werden.

2. Metallbeschichtetes Schleifmittel gemäß Anspruch 1, wobei die Metallschicht (2), mit der die Schleifmittelkörner überzogen sind, mindestens Metall enthält, das aus der aus Nickel, Nickel-Phosphor, Kobalt, Kobalt-Phosphor, Titan, Kupfer, Chrom, Eisen, Zirkonium, Niob, Molybdän und Tantal bestehenden Gruppe ausgewählt ist.

3. Metallbeschichtetes Schleifmittel nach Anspruch 1 oder 2, wobei die äußerste Metallschicht der Metallschicht (2), mit der die Schleifmittelkörner überzogen sind, aus Nickel oder Nickel-Phosphor gebildet sind.

4. Metallbeschichtetes Schleifmittel nach einem der Ansprüche 1 bis 3, wobei das Metall (3), durch das die Schleifmittelkörner gebunden sind, mindestens ein Metall enthält, das aus der aus Nickel, Nickel-Phosphor, Kobalt und Kobalt-Phosphor bestehenden Gruppe ausgewählt ist.

5. Metallbeschichtetes Schleifmittel nach Anspruch 4, wobei das Metall (3), durch das die Schleifmittelkörner gebunden sind, Nickel oder Nickel-Phosphor ist.

6. Metallbeschichtetes Schleifmittel nach einem der Ansprüche 1 bis 5, wobei die Schleifmittelkörner (1) eine durchschnittliche Korngröße von 0,5 bis 300 µm aufweisen.

7. Metallbeschichtetes Schleifmittel nach einem der Ansprüche 1 bis 6, wobei die Schleifmittelkörner (1) mindestens ein aus der aus kubischem Bornitrid, Diamant, Aluminiumoxid und Siliciumcarbid bestehenden Gruppe ausgewähltes Mitglied enthält.

8. Schleifscheibe, die ein metallbeschichtetes Schleifmittel umfasst, das 5 Gew.-% oder mehr des metallbeschichteten Schleifmittels nach einem der Ansprüche 1 bis 7 enthält.

9. Beschichtete Schleifmittel, welche die metallbeschichteten Schleifmittel nach einem der Ansprüche 1 bis 7 umfassen.

10. Verfahren zur Herstellung des metallbeschichteten Schleifmittels nach einem der Ansprüche 1 bis 7, welches das Eintauchen von Schleifmittelkörnern (1) in ein Elektroplattierungsbad oder stromloses Plattierungsbad zur Bildung einer Metallschicht (2) auf der Oberfläche der Schleifmittelkörner (1) unter Rühren und das Binden der mit der Metallschicht (2) überzogenen Schleifmittelkörner unter leichtem Rühren umfasst.

## Revendications

1. Abrasif revêtu de métal comprenant un métal (2, 3, 5, 7) et des grains d'abrasif (1, 4, 6) liés entre eux par le métal (3, 7), où
les grains d'abrasif (1, 4, 6) sont revêtus d'une pluralité de couches de métal (2, 5),
les couches de métal différentes d'une couche de métal la plus externe, avec lesquelles les grains d'abrasif (1) sont revêtus, contiennent du cobalt ou du cobalt-phosphore, et
2 à 100 grains d'abrasif (1, 4, 6) sont liés entre eux par le métal (3, 7).

2. Abrasif revêtu de métal selon la revendication 1, où la couche de métal (2), avec laquelle les grains d'abrasif sont revêtus, contient au moins un métal choisi dans le groupe consistant en le nickel, le nickel-phosphore, le cobalt, le cobalt-phosphore, le titane, le cuivre, le chrome, le fer, le zirconium, le niobium, le molybdène et le tantale.

3. Abrasif revêtu de métal selon la revendication 1 ou 2, où la couche de métal la plus externe de la couche de métal (2), avec laquelle les grains d'abrasifs sont revêtus, est formée de nickel ou de nickel-phosphore.

4. Abrasif revêtu de métal selon l'une quelconque des revendications 1 à 3, où le métal (3), par lequel les grains d'abrasif sont liés, contient au moins un métal choisi dans le groupe consistant en le nickel, le nickel-phosphore, le cobalt et le cobalt-phosphore.

5. Abrasif revêtu de métal selon la revendication 4, où le métal (3), par lequel les grains d'abrasif sont liés, est le nickel ou le nickel-phosphore.

6. Abrasif revêtu de métal selon l'une quelconque des revendications 1 à 5, où les grains d'abrasif (1) ont une taille de grain moyenne de 0,5 à 300 µm.

7. Abrasif revêtu de métal selon l'une quelconque des revendications 1 à 6, où les grains d'abrasif (1) comprennent au moins un choisi dans le groupe consistant en le nitrure de bore cubique, le diamant, l'alumine et le carbure de silicium.

8. Meule comprenant un abrasif revêtu de métal contenant 5 % en poids ou plus des abrasifs revêtus de métal selon l'une quelconque des revendications 1 à 7.

9. Abrasifs revêtus comprenant les abrasifs revêtus de métal selon l'une quelconque des revendications 1 à 7.

10. Procédé de production de l'abrasif revêtu de métal selon l'une quelconque des revendications 1 à 7 qui comprend l'immersion de grains d'abrasif (1) dans un bain d'électroplaquage ou de plaquage sans courant pour former une couche de métal (2) sur la surface des grains d'abrasif (1) tout en agitant, et la liaison des grains d'abrasif revêtus de la couche de métal (2) tout en agitant doucement.
